# EUROPÄISCHE PATENTANMELDUNG

(11) **EP 2 876 780 A1**
(43) Veröffentlichungstag der Anmeldung: **27.05.2015**
(21) Anmeldenummer: 13194465.4
(22) Anmeldetag: 26.11.2013
(51) Int. Cl.: H02K 1/02, H02K 1/30, H02K 9/06

(54) **Einrichtung mit elektrischer Maschine in Leichtbauweise**

(71) Anmelder: Siemens Aktiengesellschaft, 80333 München (DE)
(72) Erfinder: Ballauf, Christian, 80638 München (DE)

(57) **Zusammenfassung**

Ein Aktivteil (4) einer elektrischen Maschine (2) ist über eine Verbindungsstruktur mit einem Tragkörper (5) verbunden und relativ zum Tragkörper (5) fixiert. Ein Rotor (4') der elektrischen Maschine wirkt mit einem Statorpaket (4") elektromagnetisch zusammen und ist relativ zum Statorpaket (4") drehbar gelagert, so dass der Rotor (4') um eine Rotationsachse (8) rotierbar ist. Die Verbindungsstruktur umfasst zumindest eine Nabe (9), einen Tragring (12) sowie erste und zweite Streben (15, 19). Die Nabe (9) umgibt die Rotationsachse (8) und erstreckt sich in Axialrichtung von einem oberen Nabenende (10) zu einem unteren Nabenende (11). Die Nabe (9) grenzt mit dem oberen Nabenende (10) an den Tragkörper (5) an und ist dort mit dem Tragkörper (5) befestigt. Der Tragring (12) grenzt an seiner Außenseite (13) an das Aktivteil (4) an und ist mit dem Aktivteil (4) verbunden. Die ersten Streben (15) erstrecken sich vom unteren Nabenende (11) in einer Radialebene (16) nach radial außen zum Tragring (12). Die ersten Streben (15) gehen in einem jeweiligen radial inneren Übergangsbereich (17) in die Nabe (9) und in einem jeweiligen radial äußeren Übergangsbereich (18) in den Tragring (12) über. Die zweiten Streben (19) erstrecken sich vom oberen Nabenende (10) zum Tragring (12). Bezogen auf die Radialebene (16), bilden der radial innere Übergangsbereich (17) und der radial äußere Übergangsbereich (18) einer jeweiligen ersten Strebe (15) mit der Rotationsachse (8) jeweils einen Winkel (α).

## Beschreibung

Die vorliegende Erfindung betrifft eine Einrichtung,
- wobei die Einrichtung einen Tragkörper aufweist,
- wobei ein Aktivteil einer elektrischen Maschine über eine Verbindungsstruktur mit dem Tragkörper verbunden ist und relativ zum Tragkörper fixiert ist,
- wobei die elektrische Maschine einen Rotor aufweist, der mit einem Statorpaket elektromagnetisch zusammenwirkt und relativ zum Statorpaket drehbar gelagert ist, so dass der Rotor um eine Rotationsachse rotierbar ist.

Derartige Einrichtungen sind allgemein bekannt. Insbesondere ist nahezu jede übliche elektrische Maschine, die ein Gehäuse aufweist oder in eine größere Einrichtung eingebaut ist, derart aufgebaut.

Im Rahmen von mobilen Anwendungen spielt das Leistungsgewicht der elektrischen Maschine eine große Rolle. Insbesondere wird versucht, das Gewicht der elektrischen Maschine so weit wie möglich zu reduzieren. Gewichtseinsparungen werden sowohl bei den sogenannten Aktivteilen (d.h. den elektromagnetisch aktiven Komponenten, also Magneten und Wicklungen sowie Blechen bzw. Blechpaket, oft kurz auch als Rotor und Statorpaket bezeichnet) als auch bei den übrigen Komponenten, den sogenannten Passivteilen, angestrebt.

Wenn die unmittelbare Lagerung der Aktivteile nicht möglich ist, muss das zwischen den Aktivteilen wirkende Drehmoment von einer entsprechenden Verbindungsstruktur aufgenommen werden. Von dem Rotor muss das Drehmoment - gegebenenfalls über die Verbindungsstruktur - auf eine anzutreibende Rotorwelle übertragen werden. Vom Statorpaket muss das Drehmoment - gegebenenfalls über die Verbindungsstruktur - auf einen Grundkörper der Einrichtung übertragen werden.

Im Stand der Technik ist bekannt, die Verbindungsstruktur als Scheibe oder als Speichenstruktur auszubilden. In diesem Fall überträgt die Verbindungsstruktur das Drehmoment innerhalb einer orthogonal zur Rotationsachse verlaufenden Radialebene. In der Verbindungsstruktur kommt es zu erheblichen Scher- und Biegebeanspruchungen. Die Verbindungsstruktur muss daher sehr stabil und damit schwer konstruiert werden.

Die Aufgabe der vorliegenden Erfindung besteht darin, eine Einrichtung mit einer elektrischen Maschine in Leichtbauweise zu schaffen, die trotz eines hohen zu übertragenden Drehmoments mit einer einfachen, leichten Verbindungsstruktur auskommt.

Die Aufgabe wird durch eine Einrichtung mit den Merkmalen des Anspruchs 1 gelöst. Vorteilhafte Ausgestaltungen der Einrichtung sind Gegenstand der abhängigen Ansprüche 2 bis 17.

Erfindungsgemäß wird bei einer Einrichtung der eingangs genannten Art die Verbindungsstruktur derart ausgestaltet,
- dass die Verbindungsstruktur zumindest eine Nabe, einen Tragring, erste Streben und zweite Streben umfasst,
- dass die Nabe die Rotationsachse umgibt und sich in Richtung der Rotationsachse gesehen von einem oberen Nabenende zu einem unteren Nabenende erstreckt,
- dass die Nabe mit dem oberen Nabenende an den Tragkörper angrenzt und mit dem Tragkörper befestigt ist,
- dass der Tragring an seiner radial äußeren Außenseite an das Aktivteil angrenzt und mit dem Aktivteil verbunden ist,
- dass die ersten Streben sich, ausgehend von dem unteren Nabenende, in einer zur Rotationsachse orthogonalen Radialebene nach radial außen zum Tragring erstrecken,
- dass die ersten Streben in einem jeweiligen radial inneren ersten Übergangsbereich in die Nabe übergehen und in einem jeweiligen radial äußeren ersten Übergangsbereich in den Tragring übergehen,
- dass die zweiten Streben sich, ausgehend von dem oberen Nabenende, zum Tragring erstrecken und
- dass, bezogen auf die Radialebene, der radial innere erste Übergangsbereich und der radial äußere erste Übergangsbereich einer jeweiligen ersten Strebe mit der Rotationsachse jeweils einen ersten Winkel bilden.

Das Aktivteil kann alternativ der Rotor oder das Statorpaket sein. Unabhängig davon, welcher dieser beiden Fälle zutrifft, werden durch die erfindungsgemäße Ausgestaltung der Verbindungsstruktur durch das Drehmoment zwischen Rotor und Statorpaket in der Verbindungsstruktur im wesentlichen nur noch Zug- und Druckkräfte hervorgerufen. Scher- und Biegebeanspruchungen treten hingegen nur noch in geringem Umfang auf.

In Einzelfällen kann vorab bekannt sein, in welcher Richtung das Drehmoment zwischen Rotor und Statorpaket wirkt. In diesem Fall kann es - je nach Richtung des Drehmoments - von Vorteil sein, wenn die ersten Winkel um die Rotationsachse herum gesehen alle im Uhrzeigersinn oder alle gegen den Uhrzeigersinn verlaufen. Falls die Richtung des Drehmoments nicht vorab bekannt ist, ist es in der Regel von Vorteil, wenn die ersten Winkel um die Rotationsachse herum gesehen teilweise im Uhrzeigersinn und teilweise gegen den Uhrzeigersinn verlaufen.

Die ersten Streben können innerhalb der Radialebene gerade verlaufen. Vorzugsweise verlaufen die ersten Streben innerhalb der Radialebene jedoch gebogen. Dies führt in der Regel zu kleineren Spannungsbelastungen der ersten Streben. Im Gegensatz hierzu sind die zweiten Streben jedoch derart ausgebildet, dass bei einer in Richtung der Rotationsachse gerichteten Parallelprojektion der zweiten Streben deren Abbildungen innerhalb der Radialebene gerade verlaufen.

Eine besonders bevorzugte Ausgestaltung der vorliegenden Erfindung besteht darin,
- dass die zweiten Streben in einem jeweiligen radial inneren zweiten Übergangsbereich in die Nabe übergehen und in einem jeweiligen radial äußeren zweiten Übergangsbereich in den Tragring übergehen,
- dass, bezogen auf die Rotationsachse, der radial innere zweite Übergangsbereich und der radial äußere zweite Über-gangsbereich einer jeweiligen zweiten Strebe miteinander jeweils einen zweiten Winkel bilden,
- dass um die Rotationsachse herum gesehen im Bereich je einer der ersten Streben auch je eine der zweiten Streben angeordnet ist und
- dass der jeweilige zweite Winkel der im Bereich der jeweiligen ersten Strebe angeordneten zweiten Strebe gegenläufig zum jeweiligen ersten Winkel der jeweiligen ersten Strebe ist.

Durch diese Ausgestaltung werden Kräfte, die tendenziell eine Verwindung des Tragrings bewirken, möglichst klein gehalten.

Vorzugsweise weisen die zweiten Streben um die Rotationsachse herum gesehen eine zweite Strebenbreite und in Richtung der Rotationsachse gesehen eine Strebenhöhe auf, wobei die Strebenhöhe größer als die zweite Strebenbreite ist. Diese Ausgestaltung führt zu einer erhöhten Stabilität der zweiten Streben gegenüber einer in Richtung der Rotationsachse wirkenden Biegekraft.

Vorzugsweise umfasst die Verbindungsstruktur zusätzlich dritte Streben. Falls die dritten Streben vorhanden sind, erstrecken die dritten Streben sich, ausgehend von dem unteren Nabenende, in der Radialebene nach radial außen zum Tragring und verlaufen rein radial. Diese Ausgestaltung hat - bei gleicher Gesamtzahl an in der Radialebene verlaufenden Streben - in Versuchen eine höhere Stabilität bewirkt, als wenn alle in der Radialebene verlaufenden Streben als erste Streben ausgebildet sind.

In Versuchen hat sich weiterhin eine optimale Stabilität dadurch ergeben, dass um die Rotationsachse herum gesehen in der Radialebene zwischen je zwei der ersten Streben jeweils entweder keine dritten Streben oder mindestens zwei der dritten Streben angeordnet sind.

Die ersten Streben weisen in der Radialebene gesehen eine erste Strebenbreite auf, die dritten Streben eine dritte Strebenbreite. Die dritten Streben müssen jedoch nur geringere Belastungen aufnehmen und übertragen als die ersten Streben. Vorzugsweise ist die dritte Strebenbreite daher kleiner als die erste Strebenbreite. Dies führt - bei unveränderter Belastbarkeit der Verbindungsstruktur - zu einer Minimierung des Gewichts der Verbindungsstruktur.

Vorzugsweise umfasst die Verbindungsstruktur zusätzlich vierte Streben. Falls die vierten Streben vorhanden sind, erstrecken die vierten Streben sich, ausgehend von dem oberen Nabenende, zum Tragring. Die vierten Streben sind in diesem Fall vorzugsweise derart angeordnet, dass die vierten Streben bei einer in Richtung der Rotationsachse gerichteten Parallelprojektion der vierten Streben in die Radialebene auf die dritten Streben projiziert werden.

Bei der erfindungsgemäßen Ausgestaltung der Verbindungsstruktur wird ein wesentlicher Teil des Drehmoments zwischen Rotor und Aktivteil im Bereich des oberen Nabenende in die Nabe eingeleitet. Es ist daher zum Zwecke einer noch weitergehenden Reduzierung des Gewichts der Verbindungsstruktur möglich, dass die Nabe orthogonal zur Rotationsachse gesehen am oberen Nabenende eine größere Wandstärke aufweist als am unteren Nabenende. Die Wandstärke der Nabe am unteren Nabenende kann unter Umständen 10 % und weniger der Wandstärke der Nabe am oberen Nabenende betragen.

Vorzugsweise weist der Tragring an seiner radial äußeren Außenseite eine Verzahnung auf. Dadurch wird bei entsprechender Ausgestaltung des Aktivteils ein Formschluss zwischen dem Aktivteil und dem Tragring bewirkt, so dass die Übertragung des Drehmoments vom Aktivteil auf den Tragring besonders zuverlässig ist.

Die Verbindungsstruktur besteht vorzugsweise aus Aluminium. Dies führt bei relativ kleinem Gewicht zu einer relativ hohen Stabilität.

Vorzugsweise ist die Verbindungsstruktur einstückig ausgebildet. Beispielsweise kann die Verbindungsstruktur als Gussteil ausgebildet sein. Alternativ kann zwischen einzelnen Elementen die Einstückigkeit durch Stoffschluss (Verschweißen oder Löten) hergestellt sein.

Es ist möglich, dass die elektrische Maschine als Innenläufer ausgebildet ist. In diesem Fall ist das Aktivteil als Rotor der elektrischen Maschine ausgebildet. Der Tragkörper ist in diesem Fall als Rotorwelle der elektrischen Maschine ausgebildet.

Alternativ ist es möglich, dass die elektrische Maschine als Außenläufer ausgebildet ist. In diesem Fall ist das Aktivteil als Aktivteil der elektrischen Maschine ausgebildet. Der Tragkörper ist in diesem Fall als Grundkörper der elektrischen Maschine ausgebildet.

Die erfindungsgemäße Einrichtung kann im übrigen nach Bedarf ausgebildet sein. Insbesondere im Falle eines Außenläufers ist jedoch eine Anwendung im Bereich der Luftfahrt bevorzugt. In diesem Fall ist die Einrichtung ein Luftfahrzeug, insbesondere ein Hubschrauber.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Einrichtung mit einer elektrischen Maschine,
- FIG 2 und 3: je einen Längsschnitt durch eine elektrische Maschine,
- FIG 4: eine perspektivische Darstellung einer Verbindungsstruktur,
- FIG 5: eine Teilansicht eines Schnittes durch die Verbindungsstruktur von FIG 4 und
- FIG 6: einen Teil einer Draufsicht auf die Verbindungsstruktur von FIG 4.

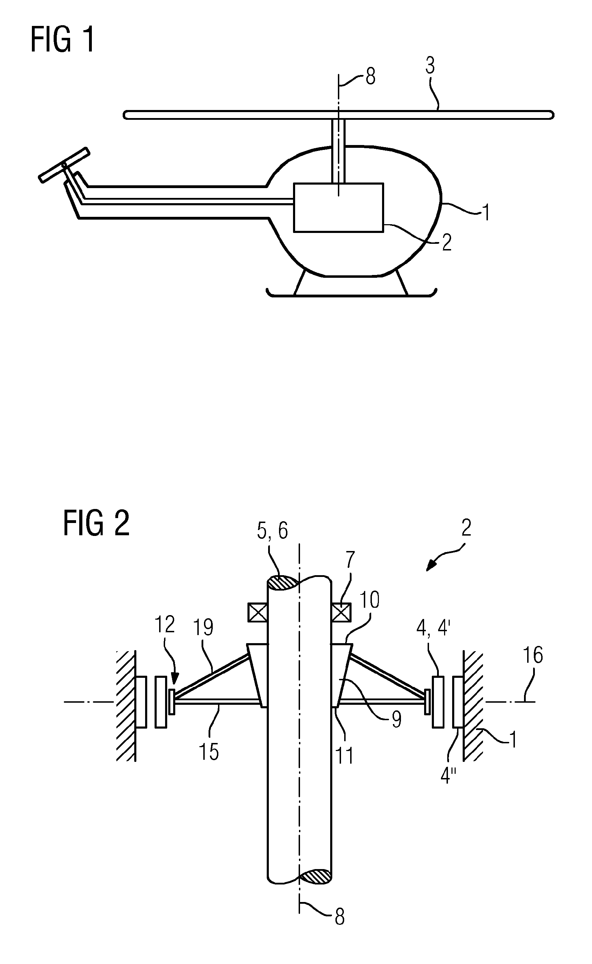

Gemäß FIG 1 weist eine - prinzipiell beliebige - Einrichtung einen Grundkörper 1 auf. Gemäß FIG 1 ist die Einrichtung ein Luftfahrzeug, nämlich ein Hubschrauber. Der Grundkörper 1 kann beispielsweise der Rumpf des Luftfahrzeugs sein. Die Darstellung von FIG 1 ist jedoch rein beispielhaft. Prinzipiell könnte der Grundkörper 1 eine beliebige Gestalt aufweisen.

Im Grundkörper 1 ist eine elektrische Maschine 2 angeordnet. Die elektrische Maschine 2 treibt ein Aggregat 3 der Einrichtung an. Insbesondere kann die elektrische Maschine 2 als Hauptantrieb der Einrichtung ausgebildet sein.

Gemäß FIG 2 ist die elektrische Maschine 2 als Innenläufer ausgebildet. In diesem Fall ist ein erstes Aktivteil 4 der elektrischen Maschine 2 als deren Rotor 4' ausgebildet. Ein zweites Aktivteil der elektrischen Maschine 2 ist in diesem Fall als deren Statorpaket 4" ausgebildet. Ein Tragkörper 5 der Einrichtung ist als Rotorwelle 6 der elektrischen Maschine 2 ausgebildet.

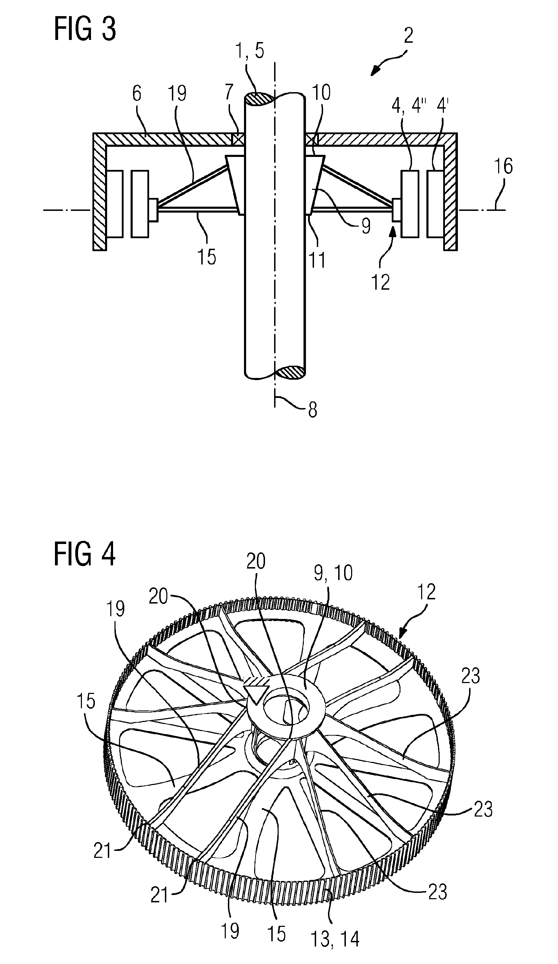

Gemäß FIG 3 ist die elektrische Maschine 2 als Außenläufer ausgebildet. In diesem Fall ist das erste Aktivteil 4 der elektrischen Maschine 2 als deren Statorpaket 4" ausgebildet. Das zweite Aktivteil der elektrischen Maschine 2 ist in diesem Fall als deren Rotor 4' ausgebildet. Der Tragkörper 5 der Einrichtung ist in diesem Fall als Grundkörper 1 der elektrischen Maschine ausgebildet ist.

Der Rotor 4' wirkt mit dem Statorpaket 4" elektromagnetisch zusammen. Zwischen dem Statorpaket 4" und dem Rotor 4' bildet sich somit die elektromotorische Kraft aus. Der Rotor 4' ist in (mindestens) einem Lager 7 gelagert, so dass der Rotor 4' um eine Rotationsachse 8 rotierbar ist.

Soweit nachfolgend die Begriffe "axial", "radial" und "tangential" verwendet werden, sind sie stets auf die Rotationsachse 8 bezogen. Axial ist eine Richtung parallel zur Rotationsachse 8. Radial ist eine Richtung orthogonal zur Rotationsachse 8 auf die Rotationsachse 8 zu oder von ihr weg. Tangential ist eine Richtung orthogonal zur Rotationsachse 8 und orthogonal zur Radialrichtung. Tangential ist also eine Richtung, die in konstantem radialem Abstand und bei konstanter Axialposition kreisförmig um die Rotationsachse 8 herum gerichtet ist.

Insbesondere bei der Ausgestaltung gemäß FIG 3, prinzipiell jedoch auch bei der Ausgestaltung gemäß FIG 2, kann der Grundkörper 1 der Bestandteil des Luftfahrzeugs sein, insbesondere entsprechend der Darstellung in FIG 1 des Hubschraubers. In Falle eines Luftfahrzeugs ist das Aggregat 3 beispielsweise als Vor- und/oder Auftrieb generierende Luftschraube ausgebildet. Bei einem Hubschrauber wird die Luftschraube zwar üblicherweise als Rotor bezeichnet. Das Wort "Rotor" wird im vorliegenden Fall jedoch absichtlich vermieden, weil es bereits in Verbindung mit dem entsprechenden Aktivteil der elektrischen Maschine 2 verwendet wird.

Die nachfolgenden Ausführungen gelten sowohl für die Ausgestaltung gemäß FIG 2 als auch für die Ausgestaltung gemäß FIG 3. In Verbindung mit den weiteren FIG wird jedoch nur noch auf das erste Aktivteil 4 eingegangen.

Das erste Aktivteil 4 ist sowohl bei der Ausgestaltung gemäß FIG 2 als auch bei der Ausgestaltung gemäß FIG 3 über eine Verbindungsstruktur mit dem Tragkörper 5 verbunden und relativ zum Tragkörper 5 fixiert. Gemäß den FIG 4 bis 6 umfasst die Verbindungsstruktur eine Nabe 9. Die Nabe 9 umgibt die Rotationsachse 8. In Richtung der Rotationsachse 8 gesehen - also in Axialrichtung gesehen - erstreckt sich die Nabe von einem oberen Nabenende 10 zu einem unteren Nabenende 11. Mit dem oberen Nabenende 11 grenzt die Nabe 9 an den Tragkörper 5 an. Mit dem oberen Nabenende 11 ist die Nabe 9 mit dem Tragkörper 5 befestigt.

Gemäß den FIG 4 bis 6 umfasst die Verbindungsstruktur weiterhin einen Tragring 12. Der Tragring 12 grenzt an seiner radial äußeren Außenseite 13 an das erste Aktivteil 4 an. Er ist mit dem ersten Aktivteil 4 verbunden. Zum Bewirken einer besonders zuverlässigen Verbindung zwischen dem Tragring 12 und dem ersten Aktivteil 4 weist der Tragring 12 an seiner Außenseite 13 vorzugsweise eine Verzahnung 14 auf.

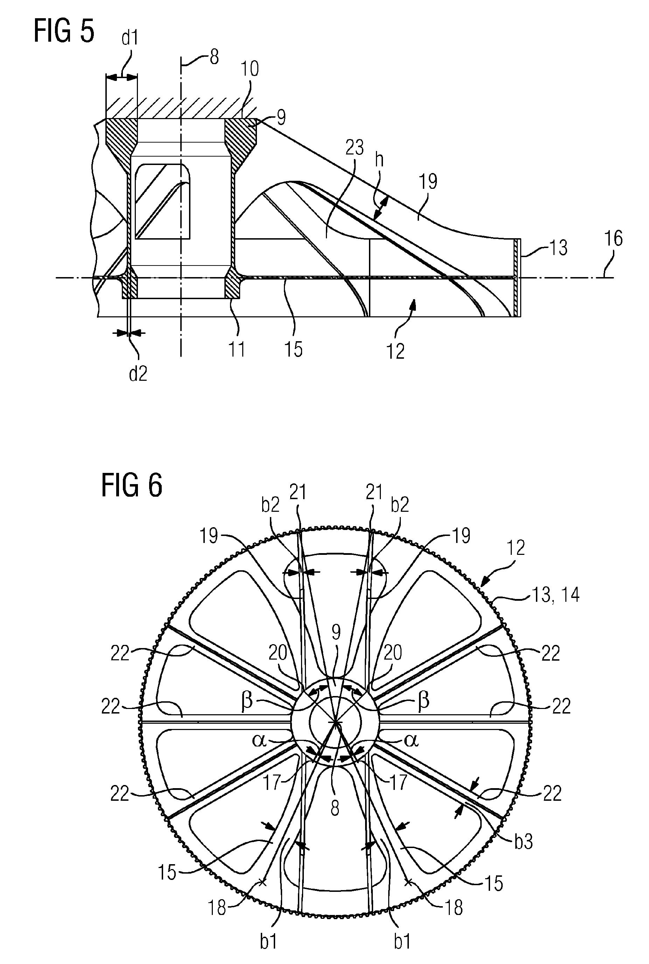

Gemäß den FIG 4 bis 6 umfasst die Verbindungsstruktur weiterhin erste Streben 15. Die ersten Streben 15 erstrecken sich in einer Radialebene 16, die orthogonal zur Rotationsachse 8 verläuft. In der Radialebene 16 erstrecken sich die ersten Streben 15, ausgehend vom unteren Nabenende 11, nach radial außen zum Tragring 12. Die ersten Streben 15 gehen in einem jeweiligen radial inneren ersten Übergangsbereich 17 in die Nabe 9 über. In einem jeweiligen radial äußeren ersten Übergangsbereich 18 gehen die ersten Streben 15 in den Tragring 12 über. Wie besonders deutlich aus FIG 6 ersichtlich ist, bilden - bezogen auf die Radialebene 16 und dort auf eine einzelne der ersten Streben 15 - der jeweilige radial innere erste Übergangsbereich 17 und der jeweilige radial äußere erste Übergangsbereich 18 mit der Rotationsachse 8 jeweils einen ersten Winkel α. Die ersten Winkel α sind in Tangentialrichtung gesehen jeweils vom radial inneren ersten Übergangsbereich 17 zum jeweiligen radial äußeren ersten Übergangsbereich 18 gerichtet. Die ersten Streben 15 weisen eine Strebenbreite b1 auf, nachfolgend als erste Strebenbreite b1 bezeichnet.

Gemäß den FIG 4 bis 6 umfasst die Verbindungsstruktur weiterhin zweite Streben 19. Auch die zweiten Streben 19 erstrecken sich zum Tragring 12. Im Gegensatz zu den ersten Streben 15 gehen sie jedoch nicht vom unteren Nabenende 11 aus, sondern vom oberen Nabenende 10.

Aus den FIG 4 bis 6 ist nicht nur die Grundausführungsform der vorliegenden Erfindung ersichtlich, sondern sind zugleich auch mehrere vorteilhafte Ausgestaltungen der vorliegenden Erfindung ersichtlich. Diese Ausgestaltungen sind unabhängig voneinander realisierbar und nach Bedarf beliebig miteinander kombinierbar, sofern sie nicht zwingend aufeinander aufbauen.

So zeigt insbesondere FIG 6 die bevorzugte Ausgestaltung, dass die ersten Winkel α teilweise im Uhrzeigersinn und teilweise gegen den Uhrzeigersinn verlaufen. Dies ist jedoch nicht zwingend. In Einzelfällen kann es sinnvoll sein, dass die ersten Winkel α um die Rotationsachse 8 herum gesehen alle im Uhrzeigersinn oder alle gegen den Uhrzeigersinn verlaufen.

Eine weitere bevorzugte Ausgestaltung besteht entsprechend der Darstellung in FIG 6 darin, dass die ersten Streben 15 innerhalb der Radialebene 16 gebogen verlaufen. Die zweiten Streben 19 sind hingegen vorzugsweise derart ausgebildet, dass bei einer axial gerichteten Parallelprojektion der zweiten Streben 19 deren Abbildungen innerhalb der Radialebene 16 gerade verlaufen.

Analog zu den ersten Streben 15 gehen die zweiten Streben 19 in einem jeweiligen radial inneren zweiten Übergangsbereich 20 in die Nabe 9 und in einem jeweiligen radial äußeren zweiten Übergangsbereich 21 in den Tragring 12 über. In einer weiteren bevorzugten Ausgestaltung bilden - analog zu den ersten Streben 15 - der radial innere zweite Übergangsbereich 20 und der radial äußere zweite Übergangsbereich 21 einer jeweiligen zweiten Strebe 19, bezogen auf die Rotationsachse 8, miteinander jeweils einen zweiten Winkel β. Die zweiten Winkel β sind in Tangentialrichtung gesehen jeweils vom radial inneren zweiten Übergangsbereich 20 zum jeweiligen radial äußeren zweiten Übergangsbereich 21 gerichtet.

Weiterhin ist um die Rotationsachse 8 herum gesehen im Bereich je einer der ersten Streben 15 auch je eine der zweiten Streben 19 angeordnet. Es besteht also vorzugsweise eine 1:1-Zuordnung je einer der zweiten Streben 19 zu je einer der ersten Streben 15. Der jeweilige zweite Winkel β der im Bereich der jeweiligen ersten Strebe 15 angeordneten zweiten Strebe 19 ist jedoch gegenläufig zum jeweiligen ersten Winkel α der jeweiligen ersten Strebe 15. Wenn also, bezogen auf eine einzelne der ersten Streben 15, der entsprechende erste Winkel α im (gegen den) Uhrzeigersinn verläuft, verläuft der zweite Winkel β der im Bereich dieser ersten Strebe 15 angeordneten zweiten Strebe 19 gegen den (im) Uhrzeigersinn.

Die zweiten Streben 19 weisen um die Rotationsachse 8 herum gesehen eine Strebenbreite b2 und in Richtung der Rotationsachse 8 gesehen eine Strebenhöhe h auf. Die Strebenbreite b2 der zweiten Streben 19 wird nachfolgend als zweite Strebenbreite b2 bezeichnet. Eine weitere bevorzugte Ausgestaltung besteht - siehe insbesondere FIG 4 - darin, dass die Strebenhöhe h größer als die zweite Strebenbreite b2 ist. Das Verhältnis zwischen Strebenhöhe h und zweiter Strebenbreite b2 kann beispielsweise zwischen 5:1 und 10:1 liegen.

Prinzipiell ist es möglich, dass in der Radialebene 16 ausschließlich die ersten Streben 15 verlaufen. In einer weiteren bevorzugten Ausgestaltung umfasst die Verbindungsstruktur jedoch zusätzlich dritte Streben 22. In diesem Fall erstrecken sich die dritten Streben 22, ausgehend von dem unteren Nabenende 11, ebenfalls in der Radialebene 16 nach radial außen zum Tragring 12. Im Gegensatz zu den ersten Streben 15 verlaufen die dritten Streben 22 jedoch rein radial. Dies ist aus FIG 4 und besonders deutlich aus FIG 6 ersichtlich. Aufbauend auf dem Vorhandensein der dritten Streben 22 sind weitere vorteilhafte Ausgestaltungen möglich.

So ist es beispielsweise möglich, dass - siehe FIG 4 und insbesondere FIG 6 - um die Rotationsachse 8 herum gesehen in der Radialebene 16 zwischen je zwei der ersten Streben 15 jeweils entweder keine dritten Streben 22 oder mindestens zwei der dritten Streben 22 angeordnet sind. Gemäß FIG 4 sind in der Radialebene 16 insgesamt zehn Streben 15, 22 angeordnet, nämlich zwei Gruppen von je zwei ersten Streben 15, deren erste Winkel α gegensinnig gerichtet sind, wobei zwischen diesen beiden Gruppen je drei dritte Streben 22 angeordnet sind.

Die dritten Streben 22 weisen - analog zu den ersten Streben 15 und den zweiten Streben 19 - eine Strebenbreite b3 auf, nachfolgend als dritte Strebenbreite b3 bezeichnet. Vorzugsweise ist entsprechend der Darstellung in FIG 6 die dritte Strebenbreite b3 kleiner als die erste Strebenbreite b1. Das Verhältnis der dritten Strebenbreite b3 zur ersten Strebenbreite b1 kann beispielsweise zwischen 30 % und 70 % der ersten Strebenbreite b1 liegen, insbesondere zwischen 40 % und 60 % der ersten Strebenbreite b1.

Falls die dritten Streben 22 vorhanden sind, kann die Verbindungsstruktur weiterhin zusätzlich vierte Streben 23 umfassen. In diesem Fall erstrecken sich die vierten Streben 23, ausgehend von dem oberen Nabenende 10, zum Tragring 12. Die vierten Streben 23 verlaufen jeweils in einer Axialebene. Insbesondere verlaufen die vierten Streben 23 jeweils oberhalb einer der dritten Streben 22. Die vierten Streben 23 sind also derart angeordnet, dass sie bei einer axial gerichteten Parallelprojektion in die Radialebene 16 auf die dritten Streben 22 projiziert werden.

Aufgrund der erfindungsgemäßen Konstruktion der Verbindungsstruktur werden die wirkenden Kräfte zu einem erheblichen Teil am oberen Nabenende 10 in die Nabe 9 eingeleitet. Über das untere Nabenende 11 findet hingegen nur in geringfügigen Umfang eine Einleitung von Kräften statt. Es ist daher entsprechend der Darstellung in FIG 5 möglich, dass die Nabe 9 orthogonal zur Rotationsachse 8 gesehen zwar am oberen Nabenende 10 in eine große Wandstärke d1 aufweist, am unteren Nabenende 11 hingegen nur eine kleine Wandstärke d2. Anders ausgedrückt: Am oberen Nabenende 10 weist die Nabe 9 orthogonal zur Rotationsachse 8 gesehen eine größere Wandstärke d1 auf als am unteren Nabenende 11.

Das Verhältnis der kleinen Wandstärke d2 zur großen Wandstärke d1 kann beispielsweise zwischen 5 % und 20 % der großen Wandstärke d1 liegen, insbesondere zwischen 8 % und 10 % der großen Wandstärke d1.

Das Material der Verbindungsstruktur kann nach Bedarf bestimmt sein. Es kann sich in Einzelfällen beispielsweise um faserverstärkte Kunststoffe handeln, insbesondere um glasfaserverstärkte Kunststoffe (GFK) oder kohlefaserverstärkte Kunststoffe (CFK). In der Regel besteht die Verbindungsstruktur jedoch aus Aluminium. In beiden Fällen kann die Verbindungsstruktur einstückig ausgebildet sein, im Falle von Aluminium insbesondere als Gussteil.

Die vorliegende Erfindung weist viele Vorteile auf. Insbesondere wird aufgrund der dreidimensionalen, gewölbeartigen Gestaltung der Verbindungsstruktur das elektromagnetische Drehmoment innerhalb der Verbindungsstruktur in einen Belastungszustand überführt, in dem nahezu ausschließlich Zug- und Druckkräfte auftreten. Dadurch wird die Übertragung des Drehmoments vom ersten Aktivteil 4 auf den Tragkörper 5 mittels einer sehr leichten Verbindungsstruktur möglich.

Zusammengefasst betrifft die vorliegende Erfindung also folgenden Sachverhalt:
Ein Aktivteil 4 einer elektrischen Maschine 2 ist über eine Verbindungsstruktur mit einem Tragkörper 5 verbunden und relativ zum Tragkörper 5 fixiert. Ein Rotor 4' der elektrischen Maschine wirkt mit einem Statorpaket 4" elektromagnetisch zusammen und ist relativ zum Statorpaket 4" drehbar gelagert, so dass der Rotor 4' um eine Rotationsachse 8 rotierbar ist. Die Verbindungsstruktur umfasst zumindest eine Nabe 9, einen Tragring 12 sowie erste und zweite Streben 15, 19. Die Nabe 9 umgibt die Rotationsachse 8 und erstreckt sich in Axialrichtung von einem oberen Nabenende 10 zu einem unteren Nabenende 11. Die Nabe 9 grenzt mit dem oberen Nabenende 10 an den Tragkörper 5 an und ist dort mit dem Tragkörper 5 befestigt. Der Tragring 12 grenzt an seiner Außenseite 13 an das Aktivteil 4 an und ist mit dem Aktivteil 4 verbunden. Die ersten Streben 15 erstrecken sich vom unteren Nabenende 11 in einer Radialebene 16 nach radial außen zum Tragring 12. Die ersten Streben 15 gehen in einem jeweiligen radial inneren Übergangsbereich 17 in die Nabe 9 und in einem jeweiligen radial äußeren Übergangsbereich 18 in den Tragring 12 über. Die zweiten Streben 19 erstrecken sich vom oberen Nabenende 10 zum Tragring 12. Bezogen auf die Radialebene 16, bilden der radial innere Übergangsbereich 17 und der radial äußere Übergangsbereich 18 einer jeweiligen ersten Strebe 15 mit der Rotationsachse 8 jeweils einen Winkel α.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Einrichtung,
- wobei die Einrichtung einen Tragkörper (5) aufweist,
- wobei ein Aktivteil (4) einer elektrischen Maschine (2) über eine Verbindungsstruktur mit dem Tragkörper (5) verbunden und relativ zum Tragkörper (5) fixiert ist,
- wobei die elektrische Maschine (2) einen Rotor (4') aufweist, der mit einem Statorpaket (4") elektromagnetisch zusammenwirkt und relativ zum Statorpaket (4") drehbar gelagert ist, so dass der Rotor (4') um eine Rotationsachse (8) rotierbar ist,
- wobei die Verbindungsstruktur zumindest eine Nabe (9), einen Tragring (12), erste Streben (15) und zweite Streben (19) umfasst,
- wobei die Nabe (9) die Rotationsachse (8) umgibt und sich in Richtung der Rotationsachse (8) gesehen von einem oberen Nabenende (10) zu einem unteren Nabenende (11) erstreckt,
- wobei die Nabe (9) mit dem oberen Nabenende (10) an den Tragkörper (5) angrenzt und mit dem Tragkörper (5) befestigt ist,
- wobei der Tragring (12) an seiner radial äußeren Außenseite (13) an das Aktivteil (4) angrenzt und mit dem Aktivteil (4) verbunden ist,
- wobei die ersten Streben (15) sich, ausgehend von dem unteren Nabenende (11), in einer zur Rotationsachse (8) orthogonalen Radialebene (16) nach radial außen zum Tragring (12) erstrecken,
- wobei die ersten Streben (15) in einem jeweiligen radial inneren ersten Übergangsbereich (17) in die Nabe (9) übergehen und in einem jeweiligen radial äußeren ersten Übergangsbereich (18) in den Tragring (12) übergehen,
- wobei die zweiten Streben (19) sich, ausgehend von dem oberen Nabenende (10), zum Tragring (12) erstrecken und
- wobei, bezogen auf die Radialebene (16), der radial innere erste Übergangsbereich (17) und der radial äußere erste Übergangsbereich (18) einer jeweiligen ersten Strebe (15) mit der Rotationsachse (8) jeweils einen ersten Winkel (α) bilden.

2. Einrichtung nach Anspruch 1, **dadurch gekennzeichnet, dass** die ersten Winkel (α) um die Rotationsachse (8) herum gesehen alle im Uhrzeigersinn oder alle gegen den Uhrzeigersinn oder teilweise im Uhrzeigersinn und teilweise gegen den Uhrzeigersinn verlaufen.

3. Einrichtung nach Anspruch 1 oder 2, **dadurch gekennzeichnet, dass** die ersten Streben (15) innerhalb der Radialebene (16) gebogen verlaufen.

4. Einrichtung nach Anspruch 1, 2 oder 3, **dadurch gekennzeichnet , dass** die zweiten Streben (19) derart ausgebildet sind, dass bei einer in Richtung der Rotationsachse (8) gerichteten Parallelprojektion der zweiten Streben (19) deren Abbildungen innerhalb der Radialebene (16) gerade verlaufen.

5. Einrichtung nach einem der obigen Ansprüche, **dadurch gekennzeichnet,**
- **dass** die zweiten Streben (19) in einem jeweiligen radial inneren zweiten Übergangsbereich (20) in die Nabe (9) übergehen und in einem jeweiligen radial äußeren zweiten Übergangsbereich (21) in den Tragring (12) übergehen,
- **dass**, bezogen auf die Rotationsachse (8), der radial innere zweite Übergangsbereich (20) und der radial äußere zweite Übergangsbereich (21) einer jeweiligen zweiten Strebe (19) miteinander jeweils einen zweiten Winkel (β) bilden,
- **dass** um die Rotationsachse (8) herum gesehen im Bereich je einer der ersten Streben (15) auch je eine der zweiten Streben (19) angeordnet ist und
- **dass** der jeweilige zweite Winkel (β) der im Bereich der jeweiligen ersten Strebe (15) angeordneten zweiten Strebe (19) gegenläufig zum jeweiligen ersten Winkel (α) der jeweiligen ersten Strebe (15) ist.

6. Einrichtung nach einem der obigen Ansprüche, **dadurch gekennzeichnet , dass** die zweiten Streben (19) um die Rotationsachse (8) herum gesehen eine zweite Strebenbreite (b2) und in Richtung der Rotationsachse (8) gesehen eine Strebenhöhe h aufweisen und dass die Strebenhöhe (h) größer als die zweite Strebenbreite (b2) ist.

7. Einrichtung nach einem der obigen Ansprüche, **dadurch gekennzeichnet , dass** die Verbindungsstruktur zusätzlich dritte Streben (22) umfasst, dass die dritten Streben (22) sich, ausgehend von dem unteren Nabenende (11), in der Radialebene (16) nach radial außen zum Tragring (12) erstrecken und dass die dritten Streben (22) rein radial verlaufen.

8. Einrichtung nach Anspruch 7, **dadurch gekennzeichnet, dass** um die Rotationsachse (8) herum gesehen in der Radialebene (16) zwischen je zwei der ersten Streben (15) jeweils entweder keine dritten Streben oder mindestens zwei der dritten Streben (22) angeordnet sind.

9. Einrichtung nach Anspruch 7 oder 8, **dadurch gekennzeichnet, dass** in der Radialebene (16) gesehen die ersten Streben (15) eine erste Strebenbreite (b1) und die dritten Streben (22) eine dritte Strebenbreite (b3) aufweisen und dass die dritte Strebenbreite (b3) kleiner als die erste Strebenbreite (b1) ist.

10. Einrichtung nach Anspruch 7, 8 oder 9, **dadurch gekennzeichnet , dass** die Verbindungsstruktur zusätzlich vierte Streben (23) umfasst, dass die vierten Streben (23) sich, ausgehend von dem oberen Nabenende (10), zum Tragring (12) erstrecken und dass die vierten Streben (23) derart angeordnet sind, dass die vierten Streben (23) bei einer in Richtung der Rotationsachse (8) gerichteten Parallelprojektion der vierten Streben (23) in die Radialebene (16) auf die dritten Streben (22) projiziert werden.

11. Einrichtung nach einem der obigen Ansprüche, **dadurch gekennzeichnet , dass** die Nabe (9) orthogonal zur Rotationsachse (8) gesehen am oberen Nabenende (10) eine größere Wandstärke (d1) aufweist als am unteren Nabenende (11).

12. Einrichtung nach einem der obigen Ansprüche, **dadurch gekennzeichnet , dass** der Tragring (12) an seiner radial äußeren Außenseite (13) eine Verzahnung (14) aufweist.

13. Einrichtung nach einem der obigen Ansprüche, **dadurch gekennzeichnet , dass** die Verbindungsstruktur aus Aluminium besteht.

14. Einrichtung nach einem der obigen Ansprüche, **dadurch gekennzeichnet , dass** die Verbindungsstruktur einstückig ausgebildet ist.

15. Einrichtung nach einem der obigen Ansprüche, **dadurch gekennzeichnet , dass** die elektrische Maschine (2) als Innenläufer ausgebildet ist, dass das Aktivteil (4) als Rotor (4') der elektrischen Maschine (2) ausgebildet ist und dass der Tragkörper (5) als Rotorwelle (6) der elektrischen Maschine (2) ausgebildet ist.

16. Einrichtung nach einem der obigen Ansprüche, **dadurch gekennzeichnet , dass** die elektrische Maschine (2) als Außenläufer ausgebildet ist, dass das Aktivteil (4) als Statorpaket (4") der elektrischen Maschine (2) ausgebildet ist und dass der Tragkörper (5) als Grundkörper (1) der elektrischen Maschine ausgebildet ist.

17. Einrichtung nach einem der obigen Ansprüche, **dadurch gekennzeichnet , dass** die Einrichtung ein Luftfahrzeug ist, insbesondere ein Hubschrauber.
